# EUROPÄISCHE PATENTSCHRIFT

(11) **EP 1 122 457 B1**
(45) Veröffentlichungstag und Bekanntmachung des Hinweises auf die Patenterteilung: **05.04.2006**
(21) Anmeldenummer: 01102070.8
(22) Anmeldetag: 30.01.2001
(51) Int. Cl.: F16F 1/373

(54) **Federelement und Verfahren zur Konstruktion eines Federelements**
Spring element and method of constructing a spring element
Elément de ressort et procédé de construction d'un élément de ressort

(30) Priorität: 31.01.2000 DE 10004015
(43) Veröffentlichungstag der Anmeldung: 08.08.2001
(73) Patentinhaber: Diemer und Dr. Jaspert GbR bestehend aus Gregor Diemer und Bodo Jaspert, 85630 Grasbrunn (DE)
(72) Erfinder: Heidinger, Florian, Dr., 83627 Warngau (DE); Jaspert, Bodo F, Dr., 85630 Grasbrunn (DE); Diemer, Gregor, 85456 Wartenberg (DE); Jereb, Edwin, 86556 Kühbach (DE)
(74) Vertreter: Manitz, Finsterwald & Partner GbR

(56) Entgegenhaltungen:
- EP-A- 0 132 048
- EP-A- 0 508 684
- WO-A-86/00051
- DE-A- 4 035 780
- DAVID SCOTT, JACK YAMAGUCHI: "LIGHT VAN HAS MASS-PRODUCED GRP SPRINGS" AUTOMOTIVE ENGINEERING,US,SOCIETY OF AUTOMOTIVE ENGINEERS, Bd. 94, Nr. 2, Februar 1986 (1986-02), Seiten 113-116, XP002167489 WARRENDALE, PA, US
- "TUBULAR SPRINGS SIMPLIFY SEAT FABRICATION" DESIGN ENGINEERING,GB,MORGAN-GRAMPIAN LTD. , November 1985 (1985-11), Seite 24 XP002167490 LONDON, GREAT-BRITAIN

## Beschreibung

Die vorliegende Erfindung betrifft ein Federelement, welches einstückig aus Kunststoff hergestellt ist, mit einer in bezug auf die Federachse oberen Stützfläche, einer unteren Stützfläche und mindestens drei jeweils von der oberen Stützfläche zur unteren Stützfläche längs mindestens zwei voneinander verschiedenen Ebenen verlaufenden, elastischen Federstreben, die zwischen oberer Stützfläche und unterer Stützfläche mindestens einmal derart abgewinkelt oder gebogen ausgebildet sind, daß sie jeweils mindestens zwei in Richtung der Federachse übereinanderliegende Abschnitte aufweisen, die bei Belastung des Federelementes elastisch aufeinander zu bewegt werden, außerdem betrifft die Erfindung ein Verfahren zur Konstruktion eines solchen Federelements, siehe DE-A-4 035 780.

Die abgewinkelten oder gebogenen Federstreben derartiger Federelemente wirken als eine Art Knickfeder und ermöglichen eine gute Federcharakteristik bei im Verhältnis zur Bauhöhe großem Federweg und mit wenig oder keinen auf die Stützflächen wirkenden Scherkräften. Durch die Anordnung von mindestens drei längs mindestens zwei voneinander verschiedenen Ebenen verlaufenden Federstreben zwischen den beiden Stützflächen kann außerdem die Gefahr eines asymmetrischen Einknickens verringert werden. Besonders vorteilhaft ist eine möglichst gleichmäßige Verteilung von drei oder mehr Federstreben um die Federachse.

Problematisch bei einer solchen Anordnung der Federstreben ist, daß die solchermaßen aufgebauten Federelemente nicht oder nur mit großem Aufwand einstückig aus Kunststoff hergestellt werden können. Bei beispielsweise vier über Kreuz angeordneten Federstreben weist das Federelement Hinterschnitte auf, die eine einstückige Herstellung nur unter Verwendung von Schiebern zusätzlich zu den beiden üblichen Formhälften erlauben.

Der Erfindung liegt die Aufgabe zugrunde, ein Federelement der eingangs genannten Art anzugeben, welches gute Federeigenschaften und insbesondere eine geringe Knickgefahr aufweist und dennoch kostengünstig einstückig aus Kunststoff herstellbar ist.

Diese Aufgabe wird durch die kennzeidnenden Merkmale des jeweiligen unabhängigen Anspruch gelöst.

Durch die erfindungsgemäße Ausgestaltung des Federelementes werden Hinterschnitte vermieden. Dadurch kann das erfindungsgemäße Federelement mit einer einfachen zweiteiligen Form einstückig aus Kunststoff hergestellt werden. Zusätzliche Schieber müssen allenfalls für gewünschte Ausnehmungen, beispielsweise zur Anbringung von Befestigungselementen an den Stützflächen, eingesetzt werden.

Durch die erfindungsgemäße Ausgestaltung wird erreicht, daß mindestens in dieser einen Richtung alle Federstreben vollständig von zwei Seiten zugänglich sind, ohne daß eine andere Federstrebe dies verhindert. Damit ist es möglich, die beiden Hälften der Form zur Herstellung des Federelementes so auszubilden, daß sie den Hohlraum für das herzustellende Federelement ohne Zuhilfenahme von Schiebern vollständig zwischen sich ausbilden können, wobei das hergestellte Federelement entformbar bleibt. Das heißt, es kann durch einfaches Wiederauseinanderfahren der beiden Formhälften aus der Form entnommen werden.

Nach einer besonderen Ausgestaltung der Erfindung ist mindestens ein Teil der Federstreben so angeordnet, daß ihre Seiten zueinander parallel verlaufen, wobei die Federstreben mit zueinander parallel verlaufenden Seiten derart zueinander versetzt angeordnet sind, daß sie sich bei Betrachtung in Richtung der parallelen Seiten nicht überlappen. Durch diese Ausgestaltung wird gewährleistet, daß in der Richtung senkrecht zur Versetzungsrichtung alle Federstreben von beiden Seiten aus zugänglich sind und daher mit einer zweiteiligen Form ausgeformt werden können, wobei die Form anschließend zur Entnahme des Federelementes wieder auseinandergefahren wird.

Bei dieser Ausgestaltung können mindestens zwei Paare von Federstreben vorgesehen sein, die jeweils paarweise an in entgegengesetzte Richtung weisenden Seiten der oberen und entsprechenden Seite der unteren Stützfläche angeordnet sind. Dadurch kann die für eine gute Knickstabilität gewünschte außen liegende Anordnung auf mehr als zwei Seiten der Stützfläche bei gleichzeitig einfacher einstückiger Herstellbarkeit des Federelementes erzielt werden. Die beiden Formhälften greifen bei dieser Ausgestaltung entsprechend der versetzten Anordnung der Federstreben verzahnt ineinander. Dadurch können sie zur Entformung in der entgegengesetzten Richtung auseinanderbewegt werden.

Eine gute Kippstabilität in jeder Richtung kann dadurch erreicht werden, daß mindestens ein Richtungspaar senkrecht auf mindestens einem anderen Richtungspaar steht. Die Federstreben sind also über Kreuz angeordnet, wobei jedoch die Federstreben mindestens eines Paares in einer Richtung in der zuvor beschriebenen Weise gegeneinander versetzt angeordnet sind, um die Entformbarkeit eines einstückig hergestellten Federelementes zu gewährleisten.

Eine gute Kippstabilität des Federelementes in allen Richtungen wird dadurch erreicht, daß mindestens drei Federstreben vorgesehen sind, die gleichmäßig um die Federachse verteilt angeordnet sind, wobei die obere Stützfläche und die untere Stützfläche mindestens so groß sind, daß die Ansatzkanten der Federstreben so weit voneinander entfernt sind, daß die Federstreben bei Betrachtung aus mindestens einer Richtung senkrecht zur zentralen Achse miteinander nicht überlappe. Beispielsweise können drei, vier oder fünf Federstreben vorgesehen sein, die so um die Federachse verteilt angeordnet und ausgebildet sind, daß sie einander mindestens bei Betrachtung in einer Richtung auch nicht teilweise gegenseitig verdecken. Auch bei dieser Ausgestaltung sind die beiden Formhälften zur Herstellung des Federelementes miteinander entsprechend der Anordnung der Federstreben verzahnt, so daß sie beim Zusammenfahren einen der Form des Federelementes entsprechenden Hohlraum zwischen sich ausbilden und in der entgegengesetzten Richtung wieder auseinandergefahren werden können.

Die Federstreben sind bevorzugt in bezug auf die Federachse nach außen und/oder nach innen abgewinkelt ausgebildet sein, wobei auch mehrere gegensinnige Abwinklungen an einer Federstrebe aufeinanderfolgen können. Durch diese Abwinklung kann eine gute Federcharakteristik erzeugt werden.

Eine andere Möglichkeit besteht darin, die Federstreben in bezug auf die Federachse nach außen und/oder nach innen bogenförmig auszubilden. Auch hier ist es möglich, mehrere Bögen gegensinnig aneinander anzuschließen. Bevorzugt ist jedoch ein Bogen oder eine Abwinklung, da hierdurch ein in bezug auf die Höhe des Federelementes maximaler Federweg erreicht werden kann.

Durch an die obere und/oder die untere Stützfläche angeformte Befestigungsmittel kann das erfindungsgemäße Federelement in einfacher Weise an anderen Bauteilen befestigt werden. Beispielsweise kann in der oberen und/oder in der unteren Stützfläche eine Ausnehmung vorgesehen sein, die in Art eines Bajonettverschlusses von einem Hakenelement hintergreifbar ist. Eine solche Ausnehmung kann durch einfache Schieber erzeugt werden, die bei der Herstellung des Federelements zusätzlich zu den beiden Formhälften verwendet werden. Trotz dieser zusätzlichen Schieber bleibt die Herstellung des Federelements verhältnismäßig einfach, da die Hauptform des Federelements allein durch die zweiteilige Form hergestellt werden kann und nur für die Ausrechmung ein Schieber benötigt wird.

Eine andere Möglichkeit besteht darin, zwei voneinander beabstandete, längs zweier einander gegenüberliegender Kreisbogenabschnitte verlaufende, an die obere und/oder die untere Stützfläche angeformte Nuten vorzusehen, deren beide Öffnungen aufeinander zu weisen. In die kreisbogenförmigen Nuten kann vorteilhafterweise ein Bauteil mit einem reziprok ausgebildeten Kreisbogenabschnitt eingedreht werden, wenn die Breite des Kreisbogenabschnittes quer zur Verbindungslinie der beiden Kreisbögen nicht größer ist als der minimale Abstand der beiden Nuten. Durch geeignete Beschränkung der Bogenlänge der Nuten und entsprechende Anordnung in bezug auf die Bewegungsrichtung der Formhälften kann die Entformbarkeit trotz dieser Nuten gewährleistet werden. Durch die Nuten wird eine vorteilhafte Befestigungsmöglichkeit für das Federelement geschaffen.

Um ein einstückig aus Kunststoff herstellbares Federelement zu konstruieren, wird die Form des Federelementes in der zuvor beschriebenen Weise gewählt. Dabei wird bevorzugt darauf geachtet, daß die Federstreben so ausgebildet und angeordnet sind, daß sie einander mindestens bei Betrachtung einer Richtung auch nicht teilweise gegenseitig verdecken. Insbesondere werden die Federstreben in mindestens einer Richtung derart zueinander versetzt angeordnet, daß ihre einander zugewandten Seitenkanten sich nicht überlappen.

Durch Anordnung der Federstreben an paarweise in entgegengesetzte Richtungen weisenden Seiten der oberen Stützfläche und entsprechenden Seiten der unteren Stützfläche kann die Kippstabilität der erzeugten Federelemente verbessert werden. Dabei kann mindestens ein Richtungspaar senkrecht zu mindestens einem anderen Richtungspaar angeordnet werden, so daß eine gekreuzte Anordnung der Federstreben erhalten wird.

Eine andere Möglichkeit besteht darin, mindestens drei Federstreben gleichmäßig verteilt um die Federachse anzuordnen, und die obere Stützfläche und die untere Stützfläche mindestens so groß auszubilden, daß die Ansatzkanten der Federstreben so weit von einander entfernt sind, daß die Federstreben bei Betrachtung aus mindestens einer Richtung senkrecht zur zentralen Achse miteinander nicht überlappen. Hierdurch können in allen Richtungen kippstabile Federelemente erzeugt werden.

Bevorzugt werden die Federstreben außerdem mit mindestens einer Abwinklung oder mindestens einem Bogen zwischen oberer und unterer Stützfläche ausgebildet. Damit kann eine gewünschte Federcharakteristik in einfacher Weise eingestellt werden. Die Abwinklung oder die Biegung der Federstreben kann nach außen und/oder nach innen vorgesehen werden.

Ausführungsbeispiele der Erfindung sind in der Zeichnung dargestellt und werden nachfolgend beschrieben. Es zeigen, jeweils in schematischer Darstellung,
- Figur 1: eine perspektivische Ansicht eines ersten Federelementes mit Befestigungselement und Tragplatte,
- Figur 2: eine Seitenansicht des Federelementes von Figur 1,
- Figur 3: eine Draufsicht auf die Oberseite des Federelementes von Figur 1,
- Figur 4: eine Draufsicht auf die Oberseite des Federelementes von Figur 1 mit einer eingefahrenen Formhälfte,
- Figur 5: eine perspektivische Ansicht eines zweiten Federelementes,
- Figur 6: eine perspektivische Ansicht eines dritten Federelementes,
- Figur 7: eine Seiteneinsicht des Federelementes von Figur 6,
- Figur 8: eine Draufsicht auf die Oberseite des Federelementes von Figur 6,
- Figur 9: eine Draufsicht auf die Oberseite des Federelementes von Figur 6 mit einer eingefahrenen Formhälfte,
- Figur 10: eine perspektivische Ansicht eines vierten Federelementes,
- Figur 11: eine Draufsicht auf eine Schmalseite des Federelementes von Figur 10,
- Figur 12: eine Draufsicht auf die Oberseite des Federelementes von Figur 10,
- Figur 13: eine Draufsicht auf die Oberseite des Federelementes von Figur 10 mit einer eingefahrenen Formhälfte,
- Figur 14: eine perspektivische Ansicht eines fünften Federelementes,
- Figur 15: eine Draufsicht auf eine Schmalseite des Federelementes von Figur 14,
- Figur 16: eine Draufsicht auf die Oberseite des Federelementes von Figur 14,
- Figur 17: eine perspektivische Ansicht eines sechsten Federelementes,
- Figur 18: eine Seitenansicht des Federelementes von Figur 17,
- Figur 19: eine Draufsicht auf die Oberseite des Federelementes von Figur 17 und
- Figur.20: eine Draufsicht auf die Oberseite des Federelementes von Figur 17 mit einer eingefahrenen Formhälfte.

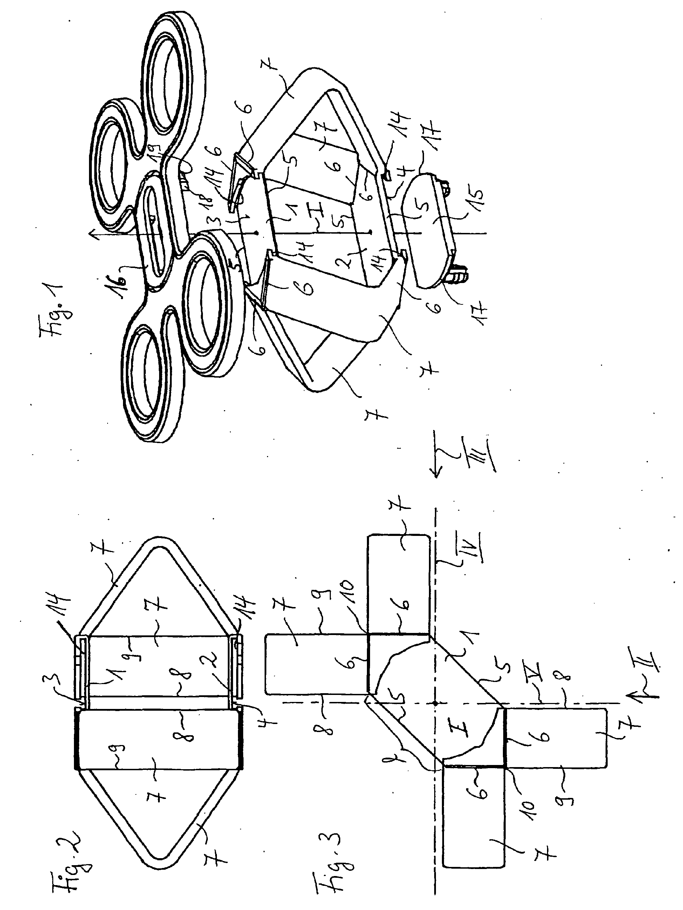

Das in den Figuren 1 bis 3 dargestellte Federelement umfaßt eine obere Platte 1 und eine untere Platte 2, die eine obere Stützfläche 3 und eine untere Stützfläche 4 bilden. Die obere Platte 1 und die untere Platte 2 sind im wesentlichen deckungsgleich und weisen die Form eines langgezogenen Sechsecks mit zwei parallelen, gleich langen Längsseiten 5 und vier untereinander gleich langen kurzen Seiten 6 auf. Je zwei kurze Seiten 6 sind mit ihrem einen Ende miteinander und mit ihrem anderen Ende mit einem Ende einer Längsseite 5 des Sechsecks verbunden, wobei die beiden kurzen Seiten 6 einen rechten Winkel miteinander einschließen, dessen Spitze 10 in bezug auf die zentrale Achse I des Federelements nach außen weist. Die vier kurzen Seiten 6 sind dadurch über Kreuz paarweise parallel zueinander und weisen paarweise über Kreuz in entgegengesetzte Richtungen.

An die vier kurzen Seiten 6 der oberen Platte 1 ist jeweils ein in Form eines flachen Profils ausgebildeter Federsteg 7 mit einem schmalen Ende angeformt. Das andere schmale Ende des Federsteges 7 ist an die darunterliegende kurze Seite 6 der unteren Platte 2 angeformt. Der Federsteg 7 ist dabei in bezug auf die zentrale Achse I des Federelementes nach außen abgewinkelt, wobei die Spitze des Winkels etwa auf halber Höhe des Federelementes liegt. Aufgrund der paarweisen Parallelität der kurzen Seiten 6 weisen die Federschenkel 7 paarweise über Kreuz in entgegengesetzte Richtungen. Dabei verlaufen die Seitenkanten 8 und 9 der Federstreben 7 parallel zu den Seitenkanten 8 und 9 der jeweils in entgegengesetzte Richtung weisenden Federstrebe 7. Desweiteren ist die Länge 1 der langen Seiten 5 der oberen Platte 1 und der unteren Platte 2 so groß gewählt, daß sich die Federstreben 7 bei Betrachtung des Federelementes in Richtung des Pfeiles II, also senkrecht zu einer Ebene IV, die senkrecht zur oberen Stützplatte 1 und zur unteren Stützplatte 2 und parallel zu einem über Kreuz liegenden Paar von kurzen Seiten 6 verläuft, nicht gegenseitig verdecken. Dasselbe gilt bei Betrachtung des Federelementes in Richtung des Pfeiles III und die Ebene V. Das heißt, die jeweils in entgegengesetzte Richtungen weisenden Federstreben 7 eines über Kreuz angeordneten Paares sind in Richtung der Ebene IV bzw. in Richtung der Ebene V gegeneinander versetzt an der oberen Platte 1 und der unteren Platte 2 angeordnet.

Die Darstellung von Figur 2 entspricht in etwa der Ansicht des Federelementes in Richtung des Pfeiles II in Figur 3. Dabei kann man erkennen, daß die in diese bzw. entgegen dieser Richtung weisenden Federstreben 7 gegeneinander versetzt sind und sich nicht verdecken. Auch die beiden quer zu dieser Richtung weisenden Federstreben 7 überdecken sich nicht.

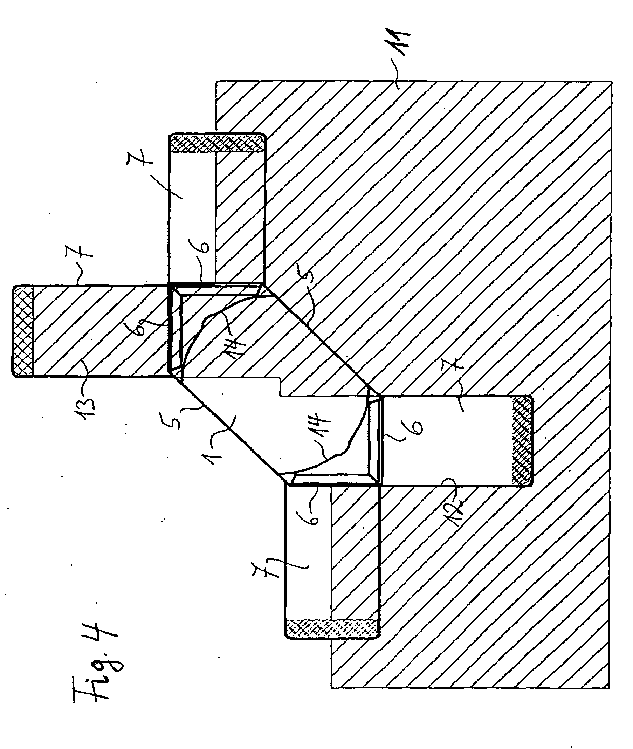

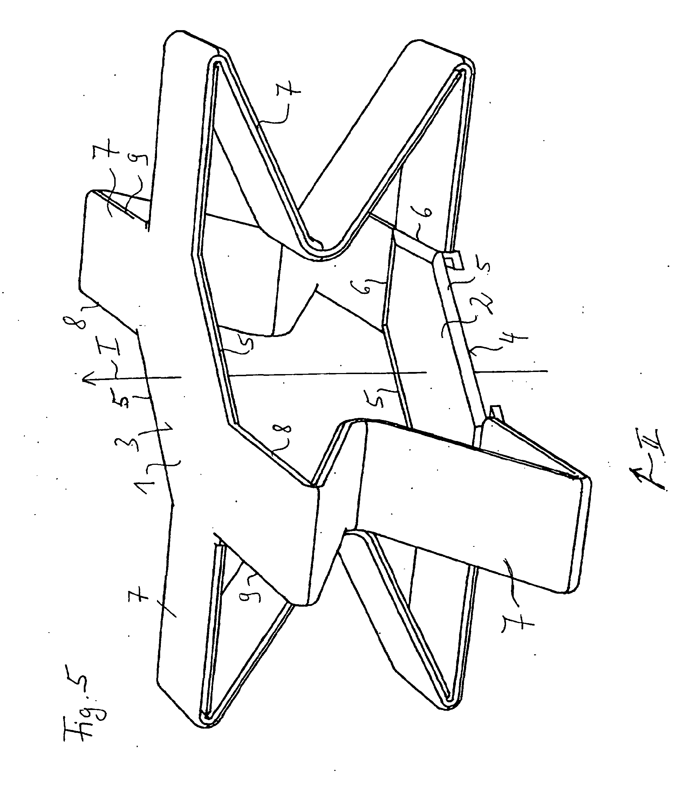

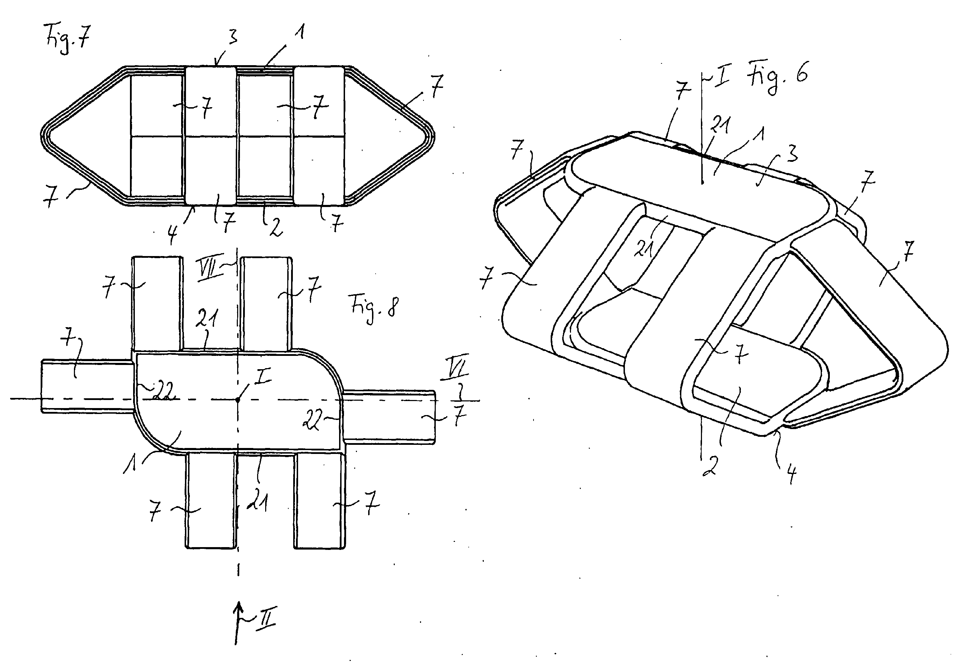

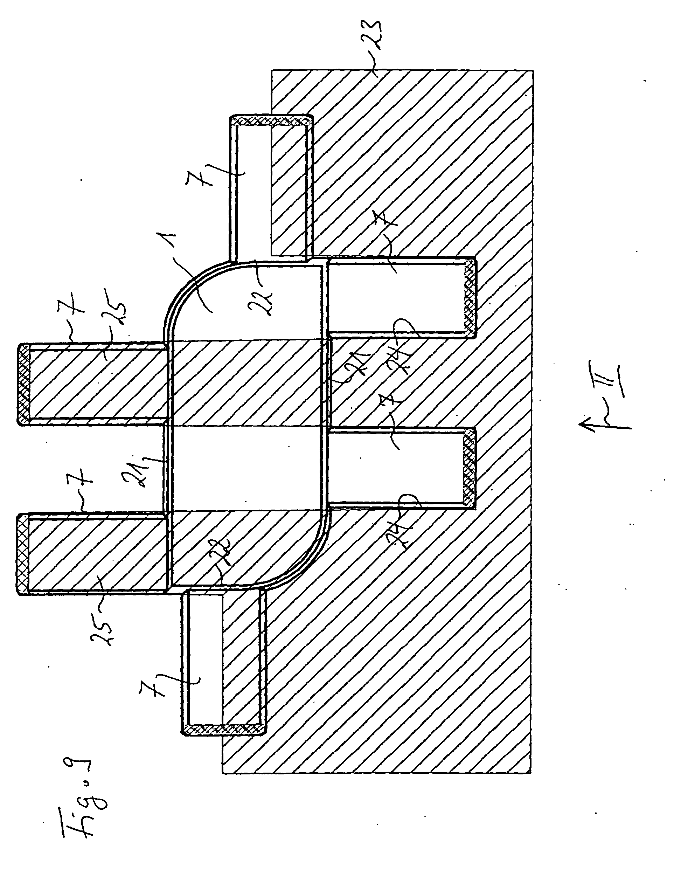

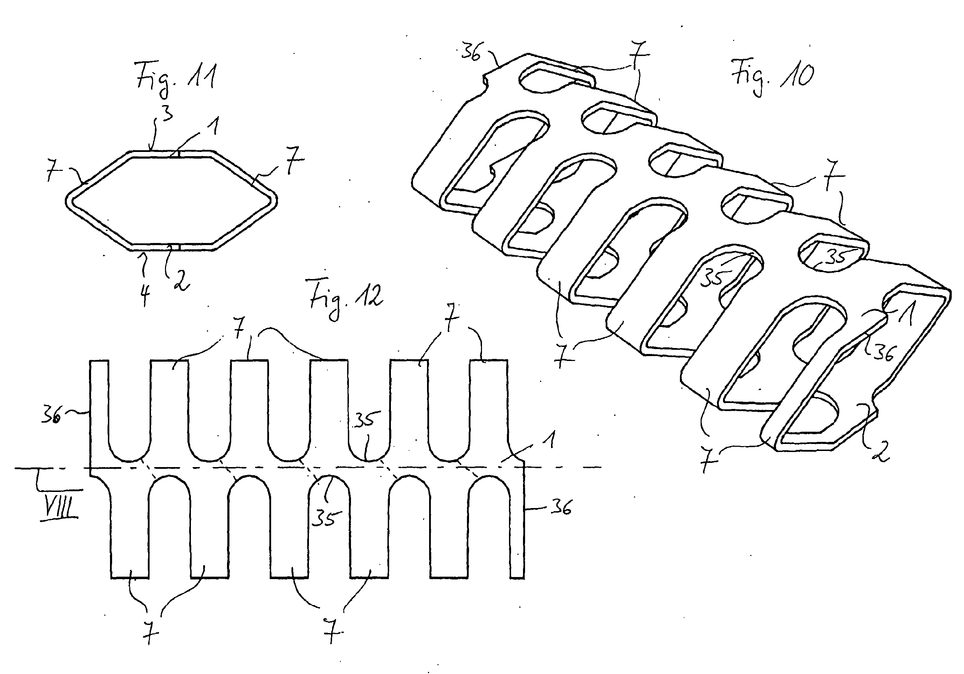

Wie man in Figur 4 erkennt, ist es aufgrund dieser Ausgestaltung des Federelementes möglich, dieses mit einer zweiteiligen Form einstückig als Kunststoffteil herzustellen und zu entformen, ohne daß zusätzlich zu den beiden Formhälften Schieber benötigt würden. Hierfür wird die eine Formhälfte in der in Figur 4 dargestellten Weise und die zweite, hier nicht dargestellte Formhälfte hierzu reziprok ausgebildet. Die beiden Formhälften weisen also jeweils eine Ausnehmung 12 und einen Vorsprung 13 auf, die wechselseitig ineinandergreifen, um zwischen sich einen Hohlraum für die beiden in Richtung des Pfeiles II bzw. entgegengesetzt hierzu weisenden Federstreben 7 auszubilden. Für die beiden übrigen Federstreben 7 und die übrigen Teile des Federelementes werden zwischen den beiden Formhälften im übrigen in üblicher Weise ebenfalls Hohlräume ausgebildet.

Wie man sieht, können die beiden Formhälften in Richtung des Pfeiles II bzw. entgegengesetzt hierzu ineinandergefahren werden, um den Hohlraum für das Federelement auszubilden. In jeweils entgegengesetzter Richtung können die beiden Formhälften nach Herstellung des Federelementes wieder auseinandergefahren werden, um das fertige Federelement aus der Form zu entnehmen. Dies bedeutet, daß das Federelement mit einer zweiteiligen Form ohne irgendwelche Schieber entformbar ist. Die Herstellung des Federelementes ist dadurch schnell und kostengünstig.

Das in den Figuren 1 bis 4 dargestellte Federelement weist zusätzlich an die obere Platte 1 und die untere Platte 2 angeformte Befestigungsnuten 14 auf. Die Nuten sind jeweils kreisbogenförmig ausgebildet und paarweise einander gegenüberliegend, mit ihrer Öffnung aufeinander zu weisend an die obere Platte 1 und die untere Platte 2 jeweils außenseitig angeformt. Zwischen die Nuten 14 kann dadurch ein Befestigungselement 15 oder eine Tragplatte 16 eingedreht werden. Das Befestigungselement 15 weist hierfür zwei reziprok zu den Nuten 14 ausgebildete Bogenabschnitte 17 auf, die voneinander abgewandte Seiten des Befestigungselementes 15 bilden. Der Abstand der beiden Bogenabschnitte entspricht dabei dem Abstand der beiden Nuten 14. Außerdem beträgt die quer zur Verbindungslinie der beiden Bogenabschnitte 17 verlaufende Breite b des Befestigungselements 5 weniger als der minimale Abstand a der beiden Nuten 14 voneinander. Dadurch kann das Befestigungselement 15 zwischen die Nuten 14 eingesetzt und zur Befestigung anschließend verdreht werden, so daß die Bogenabschnitte 17 des Befestigungselementes 15 die Nuten 14 hintergreifen.

Entsprechend sind auf der Unterseite der Tragplatte 16 Bogenabschnitte 18 angeformt, die voneinander weg weisende Rippen 19 tragen, mit denen die Bogenabschnitte 18 in die Nuten 14 eingreifen können. Dafür ist auch hier der Abstand der Bogenabschnitte 18 entsprechend dem Abstand der Nuten 14 gewählt und ist die Breite der Bogenabschnitte 18 kleiner als der minimale Abstand a der Nuten 14 voneinander. Damit kann die Tragplatte 16 in entsprechender Weise zwischen die Nuten 14 eingesetzt und durch Verdrehen am Federelement befestigt werden.

Wie man in Figur 4 erkennt, können die bogenförmigen Nuten 14 ebenfalls durch die beiden Formhälften ausgeformt werden. Die Bogenabschnitte 14 umschließen hierfür einen Winkel von maximal 90°.

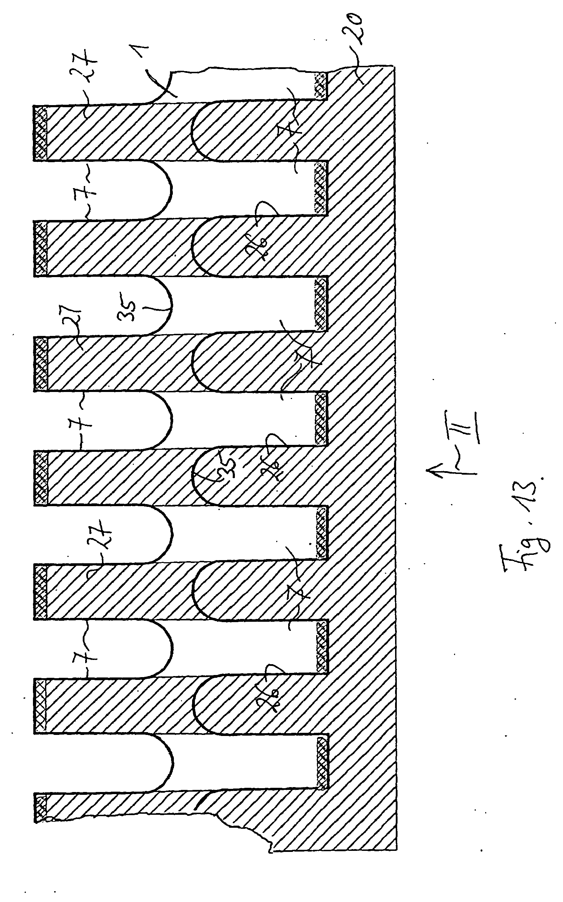

Das in Figur 5 dargestellte Federelement stimmt weitgehend mit dem Federelement der Figuren 1 bis 4 überein. Der hauptsächliche Unterschied besteht darin, daß die Federstreben 7 auf der halben Höhe des Federelementes nicht in bezug auf die zentrale Achse I nach außen sondern nach innen abgewinkelt sind. Zusätzlich weisen sie auf Höhe der oberen Platte 1 und auf Höhe der unteren Platte 2 je eine nach außen gerichtete Abwinklung auf, so daß die beiden Enden der Federstreben 7 wieder nach innen gerichtet sind und an die obere Platte 1 und die untere Platte 2 angeformt werden können. Die an die obere Platte 1 anschließenden Abschnitte der Federstreben 7 verlaufen dadurch in der Ebene der oberen Platte 1 und können mit dieser zusammen eine Auflagefläche bilden, so daß bei dieser Ausgestaltung auf eine separate Auflageplatte verzichtet werden kann. Daher sind bei der in Figur 5 dargestellten Variante an die obere Platte 1 keine Befestigungsmittel wie die bogenförmigen Nuten 14 der Variante der Figuren 1 bis 4 angeformt.

Das in den Fig. 6 bis 8 dargestellte Federelement umfaßt wiederum eine obere Platte 1 und eine hierzu parallele untere Platte 2, die eine obere Stützfläche 3 und eine untere Stützfläche 4 bilden. Die obere Platte 1 und die untere Platte 2 sind wiederum deckungsgleich und weisen im wesentlichen die Form eines langgestreckten Rechtecks auf, bei welchen jedoch zwei diagonal gegenüberliegende Ecken abgerundet ausgebildet sind. An die beiden Längsseiten 21 der oberen Platte 1 ist jeweils das eine Ende von zwei Federstreben 7 angeformt, die im Prinzip so ausgebildet sind wie die Federstreben 7 des in den Fig. 1 bis 4 dargestellten Federelements. Das jeweils andere Ende der Federstreben 7 ist an die darunterliegenden Längsseite 21 der unteren Platte 2 angeformt. Zwei weitere Federstreben 7 sind mit ihrem einen Ende jeweils an eine Schmalseite 22 der oberen Platte 1 und mit ihrem anderen Ende an die darunterliegende Schmalseite 22 der unteren Platte 2 angeformt. Alle sechs Federstreben 7 sind in bezug auf die zentrale Achse I des Federelements auf halber Höhe desselben nach außen abgewinkelt ausgebildet.

Wie man am besten in Fig. 8 erkennt, sind die Federstreben 7 in Richtung der durch die Längsachsen der oberen und der unteren Platte gehenden Ebene VI gegeneinander versetzt und alternierend auf der einen und auf der anderen Längsseite 21 der oberen Platte 1 angeordnet. Der Versatz ist dabei so groß, daß bei Betrachtung des Federelements in Richtung des Pfeiles II in Fig. 8, also senkrecht zur Ebene VI, sich die Federstreben 7 nicht gegenseitig verdecken. Diese Blickrichtung entspricht der Darstellung von Fig. 7, in welcher auch erkennbar ist, daß sich die Federstreben 7 nicht gegenseitig verdecken.

Auch die beiden an den Schmalseiten 22 der oberen Platte 1 und der unteren Platte 2 angesetzten Federstreben 7 verdecken sich in dieser Blickrichtung nicht gegenseitig, da sie an entgegengesetzten Enden der beiden Platten 1, 2 angeordnet sind und nach außen weisen. Sie sind im übrigen ebenfalls gegeneinander versetzt angeordnet, und zwar in bezug auf die durch die Querachse der oberen Platte 1 und der unteren Platte 2 gehende Ebene VII. Dieser Versatz ist allerdings zur Entformbarkeit des Federelementes nicht notwendig. Auch bei diesem Feder-element könnten Befestigungsmittel insbesondere an die obere Platte 1 und die untere Platte 2 angeformt werden. Allerdings kann auch hier wegen der Größe der oberen Platte 1 eventuell auf eine Tragplatte verzichtet werden.

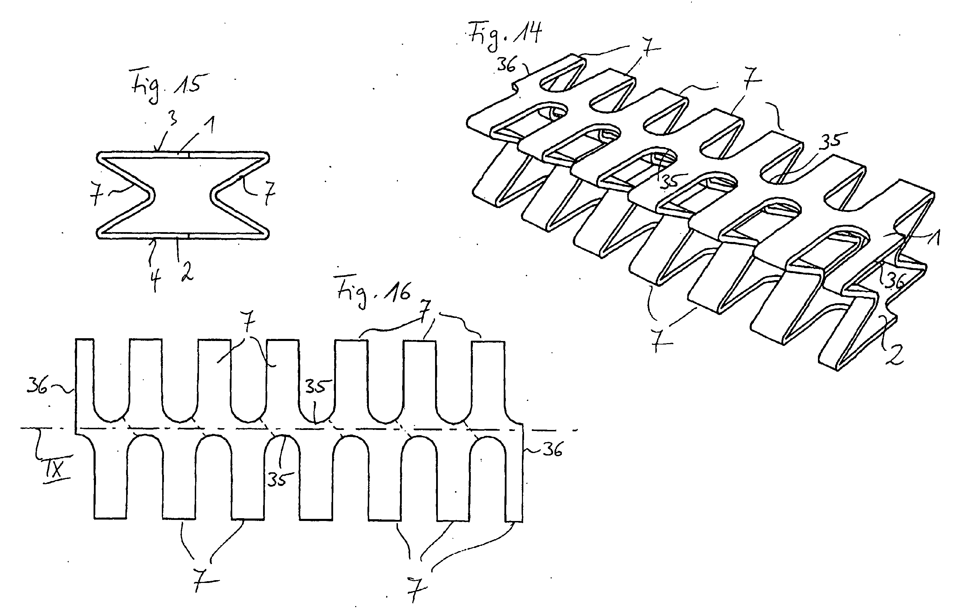

Die Entformbarkeit des Federelementes gemäß den Fig. 6 bis 8 ist Fig. 9 entnehmbar, in welcher eine Hälfte 23 eines Formenpaares eingezeichnet ist. Man erkennt, daß aufgrund des Versatzes der an den Längsseiten 21 der oberen Platte 1 und der unteren Platte 2 angesetzten Federstege 7 eine hinterschnittfreie Form vorliegt. Die beiden Formhälften weisen wiederum Ausnehmungen 24 und Vorsprünge 25 entsprechend den Federstegen 7 auf, die zueinander reziprok ausgebildet sind und beim Zusammenfahren der beiden Formhälften zahnartig ineinander greifen. Zusätzliche Schieber sind zur Herstellung des Federelementes nicht erforderlich. Die Formhälften können also nach der Herstellung des Federelementes einfach wieder entgegen der Richtung II auseinandergezogen werden, um das fertige Federelement zu entnehmen.

Das in den Fig. 10 bis 12 dargestellte Federelement ist ähnlich aufgebaut wie das in den Fig. 6 bis 9 dargestellte Federelement. Federarme 7 sind alternierend und in Richtung der durch die Längsachsen einer oberen Platte 1 und einer unteren Platte 2 gehenden Ebene VIII gegeneinander versetzt mit ihrem einen Ende an der oberen Platte 1 und mit ihrem anderen Ende an der unteren Platte 2 angeformt. Die obere Platte 1 und die untere Platte 2 sind allerdings nicht mit geraden Längskanten 35 ausgebildet, sondern zwischen den Federelementen 7 jeweils bogenförmig ausgenommen, um Material einzusparen. Außerdem sind an den Schmalseiten 36 der oberen Platte 1 und der unteren Platte 2 keine Federstege 7 angesetzt, obwohl dies grundsätzlich in derselben Weise möglich ist wie bei dem Federelement der Fig. 6 bis 9.

Das in den Fig. 10 bis 12 dargestellte Federelement weist insgesamt zwölf Federstege 7 auf. Die Anzahl der Federstege 7 kann aber prinzipiell beliebig variiert werden, das heißt, es können mehr oder weniger als zwölf Federstege 7 beidseits der oberen Platte 1 und der unteren Platte 2 vorgesehen sein. Außerdem ist es möglich, die obere Platte 1 nach jeweils zwei Federstegen 7 unterbrochen auszugestalten, wie dies mit gestrichelten Linien in Fig. 12 eingezeichnet ist. Jedes zusammenhängende Paar von Federstegen 7 bildet dadurch ein unabhängiges Federelement. Auf diese Weise können mehrere nebeneinander angeordnete unabhängige Federelemente einstückig hergestellt werden.

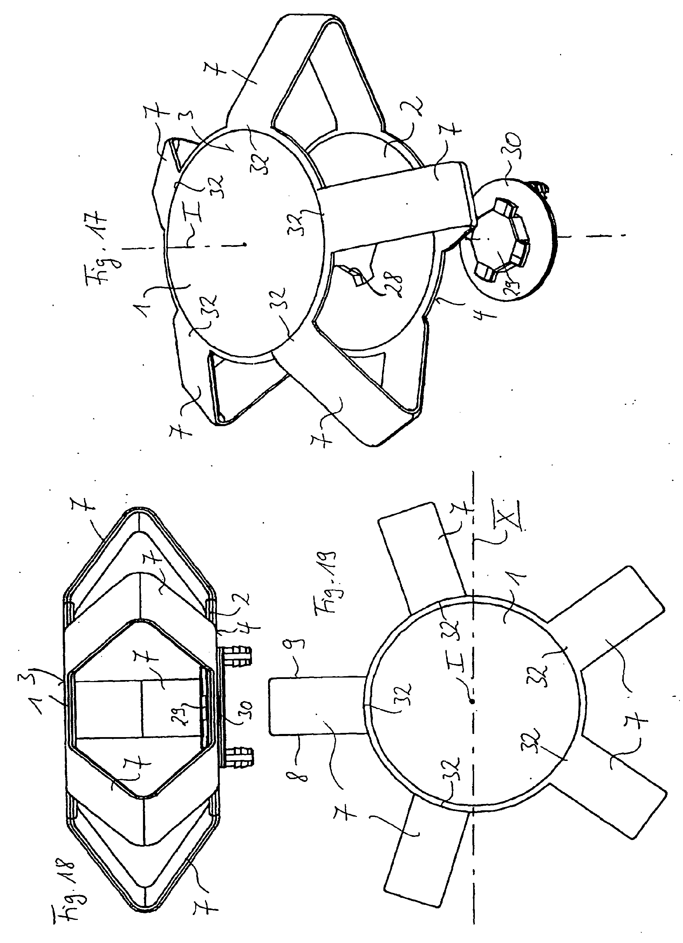

Das in den Fig. 10 bis 12 dargestellte Federelement ist ebenso einfach entformbar wie die zuvor beschriebenen Federelemente, wie sich aus der Darstellung der Fig. 13 ergibt, in welcher wiederum eine Hälfte 20 eines Formenpaares eingezeichnet ist. Wie zuvor weisen die Formhälften Ausnehmungen 26 und Vorsprünge 27 auf, die zueinander reziprok ausgebildet sind und bei zusammengefahrener Form zahnartig ineinander greifen. Das dargestellte Federelement kann dadurch ohne zusätzliche Schieber mit den beiden Formhälften hergestellt werden. Die Entformung geschieht einfach durch Auseinanderfahren der beiden Formhälften entgegen der Richtung des Pfeiles II.

Die Fig. 14 bis 16 zeigen eine Variante des Federelementes der Fig. 10 bis 12, bei welcher die Federstege 7 zwischen der oberen Platte 1 und der unteren Platte 2 nicht auf halber Höhe des Federelementes nach außen, sondern nach innen abgewinkelt ausgebildet sind und zusätzlich auf Höhe der oberen Platte 1 und auf Höhe der unteren Platte 2 eine nach außen gerichtete Abwinklung aufweisen. Die Federstege 7 sind also entsprechend dem Federelement von Fig. 5 ausgebildet. Im übrigen stimmt das Federelement der Fig. 14 bis 16 dem Federelement gemäß den Fig. 10 bis 12 grundsätzlich überein. Das heißt, es ist eine Vielzahl von Federstegen 7 alternierend und in Richtung der durch die Längsachsen der oberen Platte 1 und der unteren Platte 2 gehenden Ebene IX gegeneinander versetzt mit dem einen Ende an die obere Platte 1 und mit dem anderen Ende an die untere Platte 2 angeformt. Auch bei diesem Federelement können, wie in Fig. 16 gestrichelt dargestellt, voneinander unabhängige Federelemente aus je einem Paar aufeinander folgender Federstreben 7 geschaffen werden. Die einstückige Herstellung des Federelements kann auch hier wieder ohne zusätzliche Schieber mit zwei Formhälften erfolgen, die in Richtung des Pfeils II in Fig. 16 zusammen und in entgegengesetzter Richtung auseinander bewegt werden.

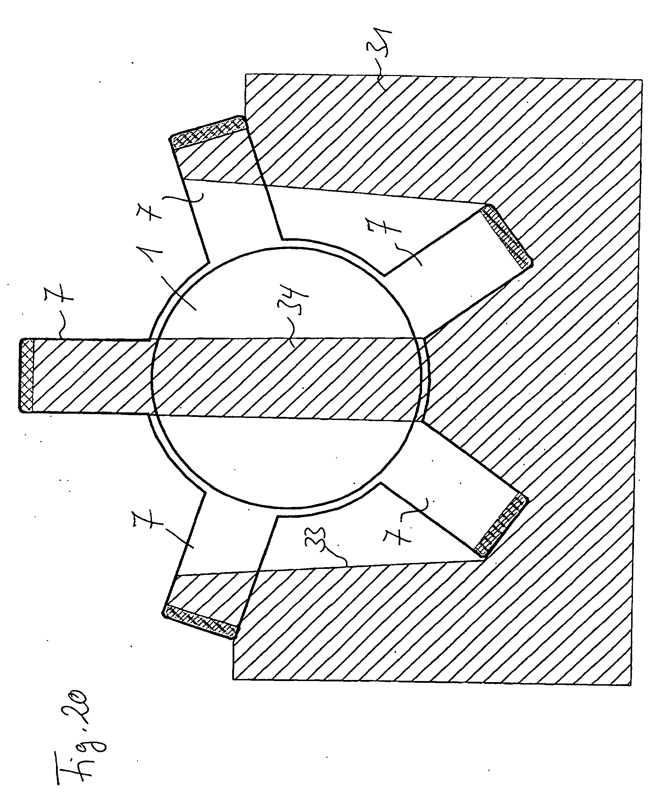

Die Fig. 17 bis 19 zeigen schließlich ein Federelement, bei welchem die obere Platte 1 und die untere Platte 2 kreisförmig ausgebildet sind. An die obere Platte 1 und die untere Platte 2 sind fünf über den Umfang der oberen Platte 1 und der unteren Platte 2 gleichmäßig verteilt angeordnete Federstreben 7 angeformt, die auf halber Höhe des Federelements eine nach außen gerichtete Abwinklung aufweisen. Die untere Platte 2 weist außerdem eine Ausnehmung 28 auf, die von einem entsprechend ausgebildeten Hakenfortsatz 29 eines Befestigungselementes 30 durchgriffen werden kann. Durch anschließendes Verdrehen des Federelementes und des Befestigungselementes 30 gegeneinander ergibt sich eine bajonettartige Verbindung.

Wie man in Fig. 18 und insbesondere in der Darstellung der Fig. 20 erkennt, in welcher wiederum eine Hälfte 31 eines Formenpaares eingezeichnet ist, ist auch das in den Fig. 17 bis 19 dargestellte Federelement mit einem einfachen Formenpaar ohne zusätzliche Schieber einstückig herstellbar und entformbar. Um dies zu gewährleisten, ist der Durchmesser der oberen Platte 1 und der unteren Platte 2 so gewählt, daß die Ansätze 32 der Federstege 7 an der oberen Platte 1 und der unteren Platte 2 in Richtung der senkrecht zur Blickrichtung II verlaufenden Ebene X so gegeneinander versetzt sind, daß sich die Ansätze 32 in Blickrichtung des Pfeils II nicht überlappen. Dadurch können dann die beiden Formhälften wieder mit zueinander reziproken Ausnehmungen 33 und Vorsprüngen 34 ausgebildet werden, die ineinander greifen können, um zwischen sich die Form für das herzustellende Federelement auszubilden, und die nach Herstellung des Federelementes auch wieder in entgegengesetzter Richtung auseinander gefahren werden können, um das hergestellte Federelement zu entnehmen.

Unter Berücksichtigung der vorbeschriebenen Prinzipien können also Federelemente in vielfältiger Form konstruiert werden, die mit einem einfachen Formenpaar ohne zusätzliche Schieber einstückig herstellbar und entformbar sind. Lediglich für optiönale Ausnehmungen, die beispielsweise zur Befestigung der Federelemente dienen, werden Schieber benötigt. Mit diesem Prinzip sind außerdem Federelemente herstellbar, die ein gute Federcharakteristik aufweisen und in allen Richtungen eine hohe Kippstabilität aufweisen.

### Bezugszeichenliste

- 1: obere Platte
- 2: untere Platte
- 3: Stützfläche
- 4: Stützfläche
- 5: Längsseite
- 6: Kurze Seite
- 7: Federsteg
- 8: Seitenkante von 7
- 9: Seitenkante von 7
- 10: Winkelspitze
- 11: Formenhälfte
- 12: Ausnehmung
- 13: Vorsprung
- 14: Nut
- 15: Befestigungselement
- 16: Tragplatte
- 17: Kante von 15
- 18: Bogenelement
- 19: Rippe
- 20: Formenhälfte
- 21: Längsseite
- 22: Kurze Seite
- 23: Formenhälfte
- 24: Ausnehmung
- 25: Vorsprung
- 26: Ausnehmung
- 27: Vorsprung
- 28: Ausnehmung
- 29: Fortsatz
- 30: Befestigungselement
- 31: Formenhälfte
- 32: Ansatz
- 33: Ausnehmung
- 34: Vorsprung
- 35: Längskante
- 36: Schmalseite

- I: Zentralachse
- II: Blickrichtung
- III: Blickrichtung
- IV: Ebene
- V: Ebene
- VI: Ebene
- VII: Ebene
- VIII: Ebene
- VIIII: Ebene
- X: Ebene

- a: Abstand
- b: Breite von 15
- 1: Länge von 5

## Patentansprüche

1. Federelement, welches einstückig aus Kunststoff hergestellt ist, mit einer in bezug auf die Federachse (I) oberen Stützfläche (3), einer unteren Stützfläche (4) und mindestens drei jeweils von der oberen Stützfläche (3) zur unteren Stützfläche (4) längs mindestens zwei voneinander verschiedenen Ebenen verlaufenden, elastischen Federstreben (7), die zwischen oberer Stützfläche (3) und unterer Stützfläche (4) mindestens einmal derart abgewinkelt oder gebogen ausgebildet sind, daß sie jeweils mindestens zwei in Richtung der Federachse (I) übereinanderliegende Abschnitte aufweisen, die bei Belastung des Federelementes elastisch aufeinander zu bewegt werden,
**dadurch gekennzeichnet,**
**daß** das Federelement so ausgebildet ist, daß die Federstreben (7) sich bei Betrachtung in mindestens einer Richtung (II) senkrecht zur Federachse (I) nicht überlappen, so daß sie sich auch nicht teilweise gegenseitig verdekken.

2. Federelement nach Anspruch 1,
**dadurch gekennzeichnet,**
**daß** mindestens ein Teil der Federstreben (7) so angeordnet ist, daß ihre Seiten zueinander parallel verlaufen und daß die Federstreben (7) mit parallel zueinander verlaufenden Seiten senkrecht zu ihren parallelen Seiten derart gegeneinander versetzt angeordnet sind, daß sie sich bei Betrachtung in Richtung (III) der parallelen Seiten nicht überlappen, wobei bevorzugt mindestens zwei Paare von Federstreben (7) vorgesehen sind, die jeweils paarweise an in entgegengesetzte Richtungen weisenden Seiten (6, 21) der oberen Stützfläche (3) und entsprechenden Seiten (6, 21) der unteren Stützfläche (4) angeordnet sind, und wobei weiter bevorzugt mindestens ein Richtungspaar senkrecht auf mindestens einem anderen Richtungspaar steht.

3. Federelement nach Anspruch 1,
**dadurch gekennzeichnet,**
**daß** mindestens drei Federstreben (7) vorgesehen sind, die gleichmäßig um die Federachse (I) des Federelements verteilt angeordnet sind, und daß die obere Stützfläche (3) und die untere Stützfläche (4) mindestens so groß sind, daß die Ansatzkanten der Federstreben (7) so weit voneinander entfernt sind, daß die Federstreben (7) bei Betrachtung aus mindestens einer Richtung (II) senkrecht zur Federachse (I) miteinander nicht überlappen.

4. Federelement nach einem der vorhergehenden Ansprüche,
**dadurch gekennzeichnet,**
**daß** an die obere Stützfläche (3) und/oder an die untere Stützfläche (4) Befestigungsmittel (14) angeformt sind, insbesondere indem in der oberen Stützfläche (3) und/oder in der unteren Stützfläche (4) eine Ausnehmung (28) vorgesehen ist, die in Art eines Bajonettverschlusses von einem Hakenelement (29) hintergreifbar ist oder indem an die obere Stützfläche (3) und/oder an die untere Stützfläche (4) zwei voneinander beabstandete, längs zwei einander gegenüberliegender Kreisbogenabschnitte verlaufende Nuten (14) angeformt sind, deren beide Öffnungen aufeinander zuweisen.

5. Verfahren zur Konstruktion eines einstückig aus Kunststoff bestehenden Federelementes mit einer in bezug auf die Federrichtung oberen Stützfläche (3), einer unteren Stützfläche (4) und mindestens drei jeweils von der oberen Stützfläche (3) zur unteren Stützfläche (4) längs mindestens zwei voneinander verschiedenen Ebenen verlaufenden, elastischen Federstreben (7), die zwischen oberer Stützfläche (3) und unterer Stützfläche (4) mindestens einmal derart abgewinkelt oder gebogen ausgebildet sind, daß sie jeweils mindestens zwei in Richtung der Federachse (I) übereinanderliegende Abschnitte aufweisen, die bei Belastung des Federelementes elastisch aufeinander zu bewegt werden,
**dadurch gekennzeichnet,**
**daß** das Federelement so ausgebildet wird, daß die Federstreben (7) einander mindestens bei Betrachtung in einer Richtung (II) senkrecht zur Federachse (I) nicht überlappen, so daß sie sich auch nicht teilweise gegenseitig verdekken.

6. Verfahren nach Anspruch 5,
**dadurch gekennzeichnet,**
**daß** mindestens ein Teil der Federstreben (7) so angeordnet wird, daß ihre Seiten zueinander parallel verlaufen und daß die Federstreben (7) mit zueinander parallel verlaufenden Seiten (8,9) derart zueinander versetzt angeordnet werden, daß sie sich bei Betrachtung in Richtung (III) der parallelen Seiten (8, 9) nicht überlappen.

7. Verfahren nach Anspruch 6,
**dadurch gekennzeichnet,**
**daß** die Federstreben (7) an paarweise in entgegengesetzte Richtungen weisenden Seiten (6) der oberen Stützfläche (3) und entsprechenden Seiten (6) der unteren Stützfläche (4) angeordnet werden, wobei bevorzugt mindestens ein Richtungspaar senkrecht zu mindestens einem anderen Richtungspaar angeordnet wird.

8. Verfahren nach Anspruch 5,
**dadurch gekennzeichnet,**
**daß** mindestens drei Federstreben (7) gleichmäßig verteilt um die Federachse (I) angeordnet werden und daß die obere Stützfläche (3) und die untere Stützfläche (4) mindestens so groß ausgebildet werden, daß die Ansatzkanten der Federstreben (7) so weit voneinander entfernt sind, daß die Federstreben (7) bei Betrachtung aus mindestens einer Richtung (II) senkrecht zur zentralen Achse (I) miteinander nicht überlappen.

9. Verfahren nach einem der Ansprüche 5 bis 8,
**dadurch gekennzeichnet,**
**daß** die Federstreben (7) mit mindestens einer in bezug auf die Federachse (I) nach außen und/ oder nach innen weisenden Abwinklung oder einem Bogen zwischen oberer Stützfläche (3) und unterer Stützfläche (4) ausgebildet werden.

10. Verfahren nach einem der vorhergehenden Ansprüche,
**dadurch gekennzeichnet,**
**daß** die obere Stützfläche (3) durch eine obere Platte (1) und die untere Stützfläche (4) durch eine untere Platte (2) gebildet wird.

## Claims

1. A spring element which is made in one piece from plastic, comprising, with respect to the spring axis (I), an upper support surface (3), a lower support surface (4) and at least three elastic spring braces (7) which each extend from the upper support surface (3) to the lower support surface (4) along at least two planes differing from one another and which are angled or bent at least once between the upper support surface (3) and the lower support surface (4) such that they each have at least two sections which lie above one another in the direction of the spring axis (I) and which are moved elastically towards one another when the spring is loaded,
**characterised in that**
the spring element is made such that the spring braces (7) do not overlap one another, when viewed in at least one direction (II) perpendicular to the spring axis (I), such that they do not mutually cover one another, not even partially.

2. A spring element in accordance with claim 1, **characterised in that** at least some of the spring braces (7) are arranged such that their sides extend parallel to one another and that the spring braces (7) with sides extending parallel to one another are arranged offset to one another perpendicular to their parallel sides such that they do not overlap, when considered in the direction (III) of the parallel sides, with preferably at least two pairs of spring braces (7) being provided which are each arranged pair-wise at sides (6, 21) of the upper support surface (3) facing in opposite directions and at corresponding sides (6, 21) of the lower support surface (4) and, furthermore, with preferably at least one direction pair standing perpendicular to at least one other direction pair.

3. A spring element in accordance with the preamble of claim 1, **characterised in that** at least three spring braces (7) are provided which are arranged distributed uniformly around the spring axis (I) of the spring element; and **in that** the upper support surface (3) and the lower support surface (4) are at least so large that the connection edges of the spring braces (7) are so far apart from one another that the spring braces (7) do not overlap one another, when considered from at least one direction (II) perpendicular to the spring axis (I).

4. A spring element in accordance with any one of the preceding claims, **characterised in that** attachment means (14) are moulded on at the upper support surface (3) and/or at the lower support surface (4), in particular **in that** a recess (28) is provided in the upper support surface (3) and/or in the lower support surface (4) and behind which a hook element (29) can en gage in the manner of a bayonet closure or **in that** two grooves (14), which are moulded at the upper support surface (3) and/or at the lower support surface (4) and whose two openings face one another, are spaced apart from one another and extend along two sections of an arc of a circle lying opposite one another.

5. A method for the construction of a spring element consisting of one piece of plastic comprising, with respect to the spring direction, an upper support surface (3), a lower support surface (4) and at least three elastic spring braces (7) which each extend from the upper support surface (3) to the lower support surface (4) along at least two planes differing from one another and which are angled or bent at least once between the upper support surface (3) and the lower support surface (4) such that they each have at least two sections which lie above one another in the direction of the spring axis (I) and which are moved elastically towards one another when the spring is loaded,
**characterised in that**
the spring element is made such that the spring braces (7) do not overlap one another, when viewed in at least one direction (II) perpendicular to the spring axis (I), so that they do not mutually cover one another, not even partially.

6. A method in accordance with claim 5, **characterised in that** at least some of the spring braces (7) are arranged such that their sides extend parallel to one another and **in that** the spring braces (7) with sides extending parallel to one another are arranged offset to one another such that they do not overlap, when considered in the direction (III) of the parallel sides.

7. A method in accordance with claim 6, **characterised in that** the spring braces (7) are arranged at sides (6) of the upper support surface (3) extending pair-wise in opposite directions and at corresponding sides (6) of the lower support surface (4), with preferably at least one direction pair being arranged perpendicular to at least one another direction pair.

8. A method in accordance with the preamble of claim 5, **characterised in that** at least three spring braces (7) are arranged uniformly distributed around the spring axis (I); and **in that** the upper support surface (3) and the lower support surface (4) are at least so large that the connection edges of the spring braces (7) are so far apart from one another that the spring braces (7) do not overlap one another, when considered from at least one direction (II) perpendicular to the central axis (I).

9. A method in accordance with any one of the claims 5 to 8, **characterised in that** the spring braces (7) are made with at least one angle or arc between the upper support surface (3) and the lower support surface (4) which faces outwardly and/or inwardly with respect to the spring axis (I).

10. A method in accordance with any one of the preceding claims, **characterised in that** the upper support surface (3) is formed by an upper plate (1) and the lower support surface (4) is formed by a lower plate (2).

## Revendications

1. Elément de ressort fabriqué d'un seul tenant en matière plastique, comprenant une surface d'appui supérieure (3) par rapport à l'axe de ressort (I), une surface d'appui inférieure (4) et au moins trois barrettes de ressort (7) élastiques s'étendant respectivement depuis la surface d'appui supérieure (3) vers la surface d'appui inférieure (4) le long d'au moins deux plans différents l'un de l'autre qui, entre la surface d'appui supérieure (3) et la surface d'appui inférieure (4), sont pliées ou cintrées au moins une fois de telle sorte qu'elles présentent respectivement au moins deux sections superposées en direction de l'axe de ressort (I) qui s'approchent l'une de l'autre élastiquement lorsque l'élément de ressort est sollicité,
**caractérisé en ce que** l'élément de ressort est configuré de telle sorte que les barrettes de ressort (7), observées dans au moins une direction (II) perpendiculaire à l'axe de ressort (I), ne se chevauchent pas de manière à ce qu'elles ne se recouvrent pas mutuellement, même partiellement.

2. Elément de ressort selon la revendication 1,
**caractérisé en ce qu'**au moins une partie des barrettes de ressort (7) est disposée de telle sorte que leurs côtés s'étendent parallèlement les uns aux autres, et **en ce que** les barrettes de ressort (7), par des côtés s'étendant parallèlement les uns aux autres, sont décalées les unes par rapport aux autres perpendiculairement à leurs côtés parallèles de telle sorte qu'étant observées dans la direction (III) des côtés parallèles, elles ne se chevauchent pas, au moins deux paires de barrettes de ressort (7) étant de préférence prévues, qui sont disposées respectivement par paires au niveau de côtés (6, 21) de la surface d'appui supérieure (3) orientés dans des directions opposées, et au niveau de côtés (6, 21) correspondants de la surface d'appui inférieure (4), et de préférence encore, au moins une paire de directions étant placée verticalement sur au moins une autre paire de directions.

3. Elément de ressort selon le préambule de la revendication 1,
**caractérisé en ce qu'**au moins trois barrettes de ressort (7) sont prévues, qui sont réparties régulièrement autour de l'axe de ressort (I) de l'élément de ressort, et **en ce que** la surface d'appui supérieure (3) et la surface d'appui inférieure (4) sont au moins assez grandes pour que les arêtes d'aboutement des barrettes de ressort (7) soient suffisamment éloignées les unes des autres afin que les barrettes de ressort (7), observées depuis au moins une direction (II) perpendiculaire à l'axe de ressort (I), ne se chevauchent pas.

4. Elément de ressort selon l'une quelconque des revendications précédentes,
**caractérisé en ce que** des moyens de fixation (14) sont rapportés par moulage sur la surface d'appui supérieure (3) et/ou la surface d'appui inférieure (4), notamment en prévoyant dans la surface d'appui supérieure (3) et/ou dans la surface d'appui inférieure (4) un évidement (28), dans lequel peut être engagé par l'arrière, à la manière d'une fermeture à baïonnette, un élément de crochet (29), ou en rapportant par moulage à la surface d'appui supérieure (3) et/ou la surface d'appui inférieure (4) deux rainures (14) distancées l'une de l'autre s'étendant le long de deux segments en arc de cercle situés en regard l'un de l'autre, dont les deux ouvertures sont orientées l'une vers l'autre.

5. Procédé de construction d'un élément de ressort fabriqué d'un seul tenant en matière plastique, comprenant une surface d'appui supérieure (3) par rapport à la direction du ressort, une surface d'appui inférieure (4) et au moins trois barrettes de ressort (7) élastiques s'étendant respectivement depuis la surface d'appui supérieure (3) vers la surface d'appui inférieure (4) le long d'au moins deux plans différents l'un de l'autre qui, entre la surface d'appui supérieure (3) et la surface d'appui inférieure (4), sont pliées ou cintrées au moins une fois de telle sorte qu'elles présentent respectivement au moins deux sections superposées en direction de l'axe de ressort (I) qui s'approchent l'une de l'autre élastiquement lorsque l'élément de ressort est sollicité,
**caractérisé en ce que** l'élément de ressort est configuré de telle sorte que les barrettes de ressort (7), observées dans au moins une direction (II) perpendiculaire à l'axe de ressort (I), ne se chevauchent pas de manière à ce qu'elles ne se recouvrent pas mutuellement, même partiellement.

6. Procédé selon la revendication 5,
**caractérisé en ce qu'**au moins une partie des barrettes de ressort (7) est disposée de telle sorte que leurs côtés s'étendent parallèlement les uns aux autres, et **en ce que** les barrettes de ressort (7), par des côtés (8, 9) s'étendant parallèlement les uns aux autres, sont décalées les unes par rapport aux autres de telle sorte qu'étant observées dans la direction (III) des côtés parallèles (8, 9), elles ne se chevauchent pas.

7. Procédé selon la revendication 6,
**caractérisé en ce que** les barrettes de ressort (7) sont disposées au niveau de côtés (6) de la surface d'appui supérieure (3) orientés par paires dans des directions opposées, et au niveau de côtés (6) correspondants de la surface d'appui inférieure (4), au moins une paire de directions étant de préférence disposée perpendiculairement à au moins une autre paire de directions.

8. Procédé selon le préambule de la revendication 5,
**caractérisé en ce qu'**au moins trois barrettes de ressort (7) sont réparties régulièrement autour de l'axe de ressort (I), et **en ce que** la surface d'appui supérieure (3) et la surface d'appui inférieure (4) sont au moins assez grandes pour que les arêtes d'aboutement des barrettes de ressort (7) soient suffisamment éloignées les unes des autres pour que les barrettes de ressort (7), observées depuis au moins une direction (II) perpendiculaire à l'axe central (I), ne se chevauchent pas.

9. Procédé selon l'une quelconque des revendications 5 à 8,
**caractérisé en ce que** les barrettes de ressort (7) sont configurées avec au moins un pliage orienté vers l'extérieur et/ou vers l'intérieur par rapport à l'axe de ressort (I), ou avec un arc entre la surface d'appui supérieure (3) et la surface d'appui inférieure (4).

10. Procédé selon l'une quelconque des revendications précédentes,
**caractérisé en ce que** la surface d'appui supérieure (3) est formée par une plaque supérieure (1) et la surface d'appui inférieure (4) par une plaque inférieure (2).
